# EUROPÄISCHE PATENTSCHRIFT

(11) **EP 3 956 183 B1**
(45) Veröffentlichungstag und Bekanntmachung des Hinweises auf die Patenterteilung: **29.03.2023**
(21) Anmeldenummer: 20719172.7
(22) Anmeldetag: 14.04.2020
(51) Int. Cl.: B60S 1/32, B60S 1/52

(54) **WINDABWEISER FÜR EINE SCHEIBENWISCHANLAGE EINES KRAFTWAGENS**
WIND DEFLECTOR FOR A WINDOW WIPER SYSTEM OF A MOTOR VEHICLE
DÉFLECTEUR D'AIR DESTINÉ À UN SYSTÈME D'ESSUIE-GLACE D'UN VÉHICULE AUTOMOBILE

(30) Priorität: 16.04.2019 DE 102019110079
(43) Veröffentlichungstag der Anmeldung: 23.02.2022
(73) Patentinhaber: Audi AG, 85045 Ingolstadt (DE); Dr. Ing. h.c. F. Porsche AG, 70435 Stuttgart (DE); A. Raymond et Cie, 38000 Grenoble (FR); VOLKSWAGEN AKTIENGESELLSCHAFT, 38440 Wolfsburg (DE)
(72) Erfinder: HAEFNER, Stephan, 95473 Prebitz (DE); ACKERMANN, Frank, 38154 Koenigslutter am Elm (DE); AUCH, Sven, 70327 Stuttgart (DE); FEGER, Axel, 79540 Loerrach (DE); BODE, Karl, 79540 Loerrach (DE)
(74) Vertreter: Hofstetter, Schurack & Partner
(86) Internationale Anmeldenummer: PCT/EP2020/060417
(87) Internationale Veröffentlichungsnummer: WO 2020/212321

(56) Entgegenhaltungen:
- DE-A1- 19 914 122
- DE-A1-102012 211 083
- FR-A1- 2 642 715

## Beschreibung

Die Erfindung betrifft einen Windabweiser für eine Scheibenwischanlage eines Kraftwagens gemäß dem Oberbegriff des Patentanspruchs 1.

Aus der DE 87 16 154 U1 ist bereits eine Anbauvorrichtung für einen Scheibenwischer bekannt, welche eine Windabweisfunktion aufweist. Die Anbauvorrichtung ist in einem Strangpressverfahren aus einem Kunststoff hergestellt und umfasst eine Aufnahme zur Befestigung einer Wischerstange eines Wischerarms der Scheibenwischanlage. Außerdem umfasst die Anbauvorrichtung eine Aufnahme für einen Schlauch einer Scheibenwaschanlage mit wenigstens einer Düse zum Reinigen einer Scheibe, welche durch die Scheibenwischanlage gewischt werden kann.

Die FR 2 642 715 A1 offenbart einen Windabweiser nach dem Oberbegriff des Anspruchs 1.

Aufgabe der vorliegenden Erfindung ist es, einen Windabweiser der eingangs genannten Art zu schaffen, bei welchem der Windabweiser bzw. der gesamte Wischerarm mit dem Wischerblatt besonders zuverlässig und sicher über alle Fahrgeschwindigkeiten hinweg an der Scheibe gehalten ist und bei welcher andererseits die Reinigungsflüssigkeit der Scheibenwaschanlage besonders zuverlässig auf die Scheibe bzw. in den Bereich des Wischblatts gelangt.

Diese Aufgabe wird erfindungsgemäß durch einen Windabweiser mit den Merkmalen des Patentanspruchs 1 gelöst. Vorteilhafte Ausgestaltungen der Erfindung sind Gegenstand der abhängigen Ansprüche.

Der erfindungsgemäße Windabweiser zeichnet sich zunächst dadurch aus, dass in diesen eine Scheibenreinigungseinrichtung mit wenigstens einer Düse zum Reinigen der Scheibe integriert ist, welche mittels eines an einem Wischerarm angeordneten Wischerblatts wischbar ist. Darüber hinaus umfasst der Windabweiser eine Windabweiskontur, mittels welcher eine Luftströmung im Bereich des zugeordneten Wischerarms und des zugehörigen Wischerblatts geleitet werden kann.

Um hierbei einerseits einen aerodynamisch besonders günstigen Windabweiser zu schaffen, welcher über alle Fahrgeschwindigkeiten hinweg den Wischerarm und das Wischerblatt auf zuverlässige Weise auf der korrespondierenden Scheibe hält, und welcher andererseits sicherstellt, dass die aus der jeweiligen Düse austretende Reinigungsflüssigkeit auf die Oberfläche der Scheibe gelangt, ist es erfindungsgemäß vorgesehen, dass der Windabweiser auf seiner dem Wischerblatt zugewandten Seite wenigstens ein Windleitelement, insbesondere in Form eines Höckers, umfasst, welches im Bereich der zugeordneten Düse angeordnet ist und erhaben in Richtung der Scheibe absteht. Vorzugsweise ist dabei eine Mehrzahl jeweiliger Windleitelemente bzw. Höcker auf der dem Wischerblatt bzw. der Scheibe zugewandten Seite des Windabweisers angeordnet, welche in einem jeweiligen Abstand zueinander angeordnet sind. Die Ausgestaltung der jeweiligen Windleitelemente bzw. Höcker lediglich über einen jeweiligen Längenbereich des Windleitelements, wobei eine Unterbrechung zum benachbarten Windleitelement vorgesehen ist, ermöglicht dabei einerseits eine günstige aerodynamische Beeinflussung des Wischerarms und des Wischerblatts, sodass dieses über alle Fahrgeschwindigkeiten hinweg auf zuverlässige Weise gegen die Scheibe gedrückt wird, wobei andererseits durch das jeweilige Windleitelement eine Art Windschatten geschaffen, in welchem die Düse angeordnet werden kann, und der freie Weg zur Scheibe verringert wird, sodass aus der Düse austretende Reinigungsflüssigkeit nicht übermäßig verwirbelt und dadurch beispielsweise nicht auf die Oberfläche der Scheibe gelangt, sondern dass vielmehr genau das Gegenteil erreicht wird, nämlich dass die Reinigungsflüssigkeit in einem relativ wenig abgelenkten Strahl auf die Oberfläche der Scheibe gelangt. Durch die Wahl jeweiliger, relativ schmaler Windleitelemente wird somit im Unterschied zu beispielsweise einem durchgängigen, leisten- bzw. lippenartigen Windleitelement erreicht, dass kein übermäßiger Düseneffekt auftritt, welcher den jeweiligen, aus der Düse austretenden Strahl an Reinigungsflüssigkeit übermäßig ablenkt und verwirbelt, sondern dass vielmehr der Strahl auf der Oberfläche der Scheibe auftritt. Andererseits wird dennoch - auch durch die Unterbrechung zwischen den jeweiligen Windleitelementen bzw. Höckern - eine hinreichende aerodynamische Beeinflussung erreicht, sodass der Wischerarm und das Wischerblatt zuverlässig gegen die Scheibe gedrückt werden.

Erfindungsgemäß ist die Düse in das jeweils zugehörige Windleitelement bzw. den zugeordneten Höcker integriert. Hierdurch ergibt sich ein aus der Düse austretender Strahl an Reinigungsflüssigkeit, welcher besonders günstig auf die Scheibe gelangt.

Erfindungsgemäß ist in das jeweilige Windleitelement bzw. den jeweiligen Höcker ein gegenüber der Düse im Querschnitt vergrößerter Schutzkanal integriert. Somit kann die Düse verborgen angeordnet werden, sodass der aus dieser austretende Strahl an Reinigungsflüssigkeit ungehindert durch den Schutzkanal austreten und in Richtung der Oberfläche der Scheibe gelangen kann.

Eine weitere vorteilhafte Ausführungsform der Erfindung sieht vor, dass die Düse bzw. der Schutzkanal an einer der Scheibe zugewandten Vorderseite des Windleitelements bzw. des Höckers mündet. Demzufolge ist es erfindungsgemäß vorgesehen, dass der Strahl an Reinigungsflüssigkeit an der zugewandten Vorderseite in Richtung der Scheibe austritt. Somit ergibt sich eine äußerst kurze Distanz zwischen der Vorderseite des Windleitelements bzw. Höckers und der Oberfläche der Scheibe, welche durch den Strahl an Reinigungsflüssigkeit überwunden werden muss.

Eine weitere vorteilhafte Ausführungsform der Erfindung sieht vor, dass das Windleitelement bzw. der Höcker aus einer elastischen Kunststoffkomponente des Windabweisers gebildet ist. Somit ergibt sich eine besonders günstige Oberfläche des Windabweisers, welche beispielsweise Beschädigungen der Scheibe vermeidet.

In weiterer Ausgestaltung der Erfindung ist an einer Oberseite des Windabweisers eine Abrisskante vorgesehen, wobei diese Abrisskante vorzugsweise einen Radius von kleiner 2 mm aufweist. Hierdurch ergibt sich ein aerodynamisch besonders günstiger Windabweiser, welcher unter anderem auch dafür sorgt, dass der Wischerarm und das Wischerblatt über alle Fahrgeschwindigkeiten zuverlässig gegen die Scheibe gedrückt werden.

Eine weitere vorteilhafte Ausführungsform der Erfindung sieht vor, dass die Düse in einer harten Kunststoffkomponente des Windabweisers integriert ist. Hierdurch kann ein besonders starker und zielgenau orientierter Strahl an Reinigungsflüssigkeit erzeugt werden.

Schließlich hat es sich als vorteilhaft gezeigt, wenn eine Mehrzahl von Windleitelementen in einer Reihe angeordnet sind. Somit wird - wie bereits vorab beschrieben - ein übermäßiger Düseneffekt an der Unterseite des Windabweisers vermieden und gleichzeitig eine hinreichende Beaufschlagung der Oberfläche der Scheibe mit Reinigungsflüssigkeit gewährleistet.

Im Folgenden sind Ausführungsbeispiele der Erfindung beschrieben. Hierzu zeigt:

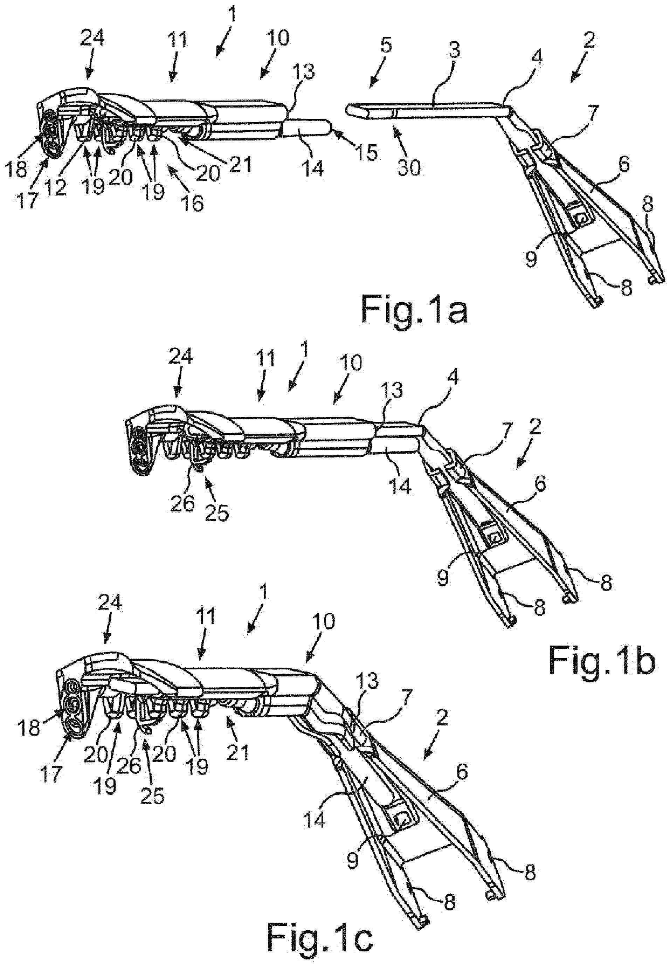

- Fig. 1a-1c: jeweilige Perspektivdarstellungen einer Montageabfolge eines Funktionselements, welches als Windabweiser ausgebildet ist und eine Scheibenreinigungseinrichtung umfasst, auf eine Wischerstange eines Wischerarms einer Scheibenwischanlage für einen Kraftwagen gemäß einer ersten Ausführungsform, wobei Fig. 1a das Funktionselement noch separat von der Wischerstange zeigt, Fig. 1b das Funktionselement in teilweise aufgesteckter Position an der Wischerstange zeigt, und Fig. 1c das vollständig auf der Wischerstange aufgesteckte Funktionselement darstellt;

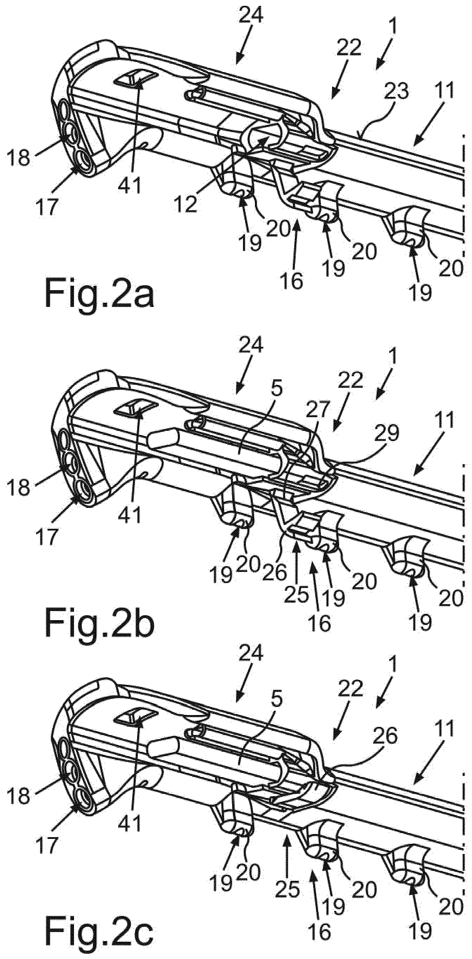

- Fig. 2a-2c: jeweilige ausschnittsweise Perspektivdarstellungen des Funktionselements der ersten Ausführungsform der Scheibenwischanlage, wobei Fig. 2a das Funktionselement vor dem Aufstecken auf die Wischerstange zeigt, Fig. 2b das Funktionselement bei vollständig aufgesteckter, jedoch noch nicht mittels einer Befestigungseinrichtung gesicherter Position zeigt, und Fig. 2c das anschließend mittels der Befestigungseinrichtung an der Wischerstange fixierte Funktionselement darstellt;

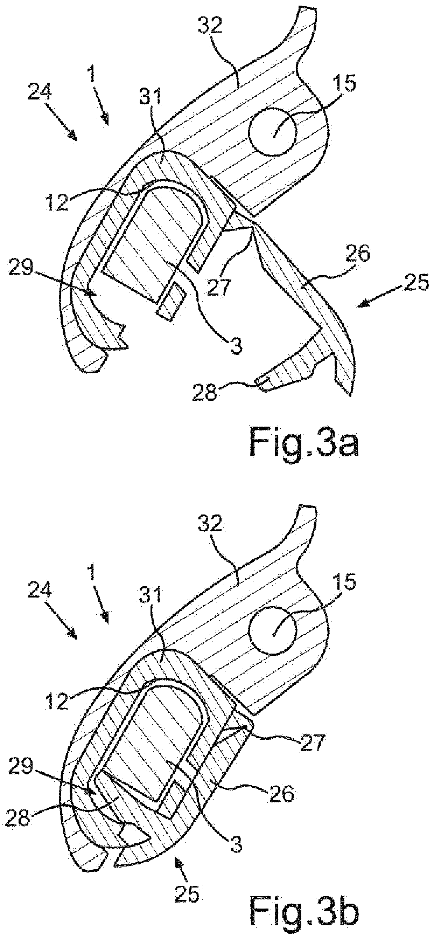

- Fig. 3a, 3b: jeweilige Schnittansichten durch das Funktionselement in seiner an der Wischerstange angeordneten Position, wobei Fig. 3a die Befestigungseinrichtung zum Fixieren des Funktionselements an der Wischerstange in geöffnetem Zustand und Fig. 3b die Befestigungseinrichtung in geschlossenem, das Funktionselement an der Wischerstange fixierenden Position dargestellt ist;

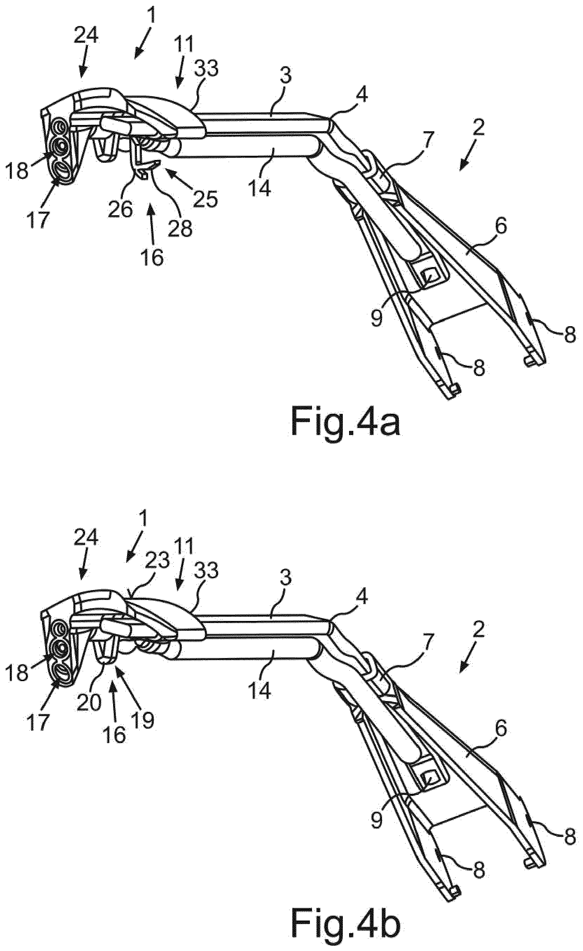

- Fig. 4a, 4b: jeweilige Perspektivansichten auf ein an der korrespondierenden Wischerstange befestigtes Funktionselement gemäß einer weiteren Ausführungsform, bei welcher das Funktionselement kürzer ausgebildet ist und sich demzufolge nicht bis an den Federkasten des Wischerarms erstreckt, wobei Fig. 4a das Funktionselement bei einer geöffneten Befestigungseinrichtung und Fig. 4b bei einer geschlossenen Befestigungseinrichtung zeigt;

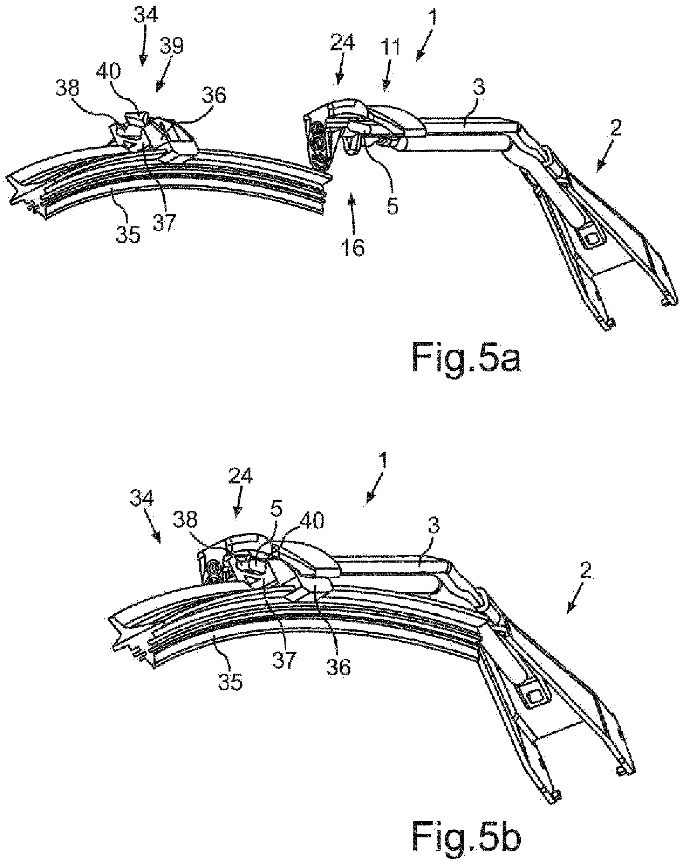

- Fig. 5a, 5b: jeweilige Perspektivansichten des Wischerarms mit dem daran montierten Funktionselement gemäß den Fig. 4a und 4b, wobei Fig. 5a ein Wischerblatt vor seiner Montage und Fig. 5b das Wischerblatt nach der Montage mittels eines Adapters zeigt, welcher unabhängig von dem Funktionselement am freien Ende der Wischerstange des Wischerarms angeordnet und fixiert ist.

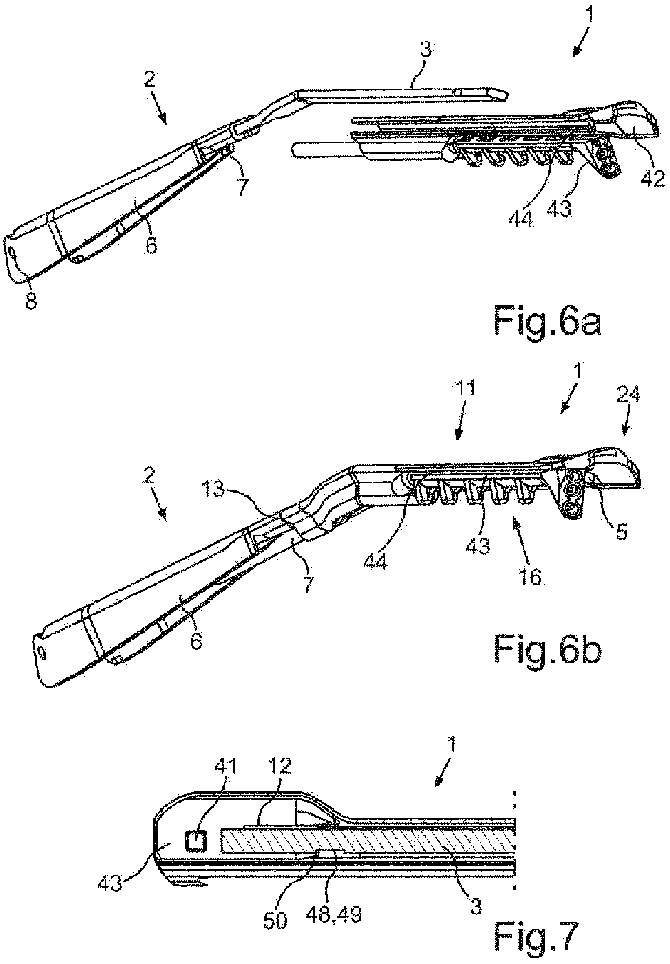

- Fig. 6a, 6b: jeweilige Perspektivansichten auf ein an der korrespondierenden Wischerstange befestigtes Funktionselement gemäß einer weiteren Ausführungsform, bei welcher das Funktionselement aus zwei Teilen gebildet ist, welche an einem Filmscharnier oder dergleichen miteinander verbunden sind und durch Zusammenklappen miteinander zu verbinden bzw. an der Wischerstange zu befestigen sind, wobei Fig. 6a das Funktionselement vor der Fixierung an der Wischerstange und Fig. 6b das Funktionselement nach der Fixierung an der Wischerstange zeigt;
- Fig. 7: eine ausschnittsweise Schnittansicht durch das Funktionselement sowie die zugehörige Wischerstange, an welcher das Funktionselement befestigt ist, entlang einer Schnittebene, welche sich in einer Trennebene zwischen den beiden Teilen des Funktionselements erstreckt, wobei insbesondere eine Befestigungseinrichtung erkennbar wird, mittels welcher das Funktionselement an der Wischerstange gesichert ist; und

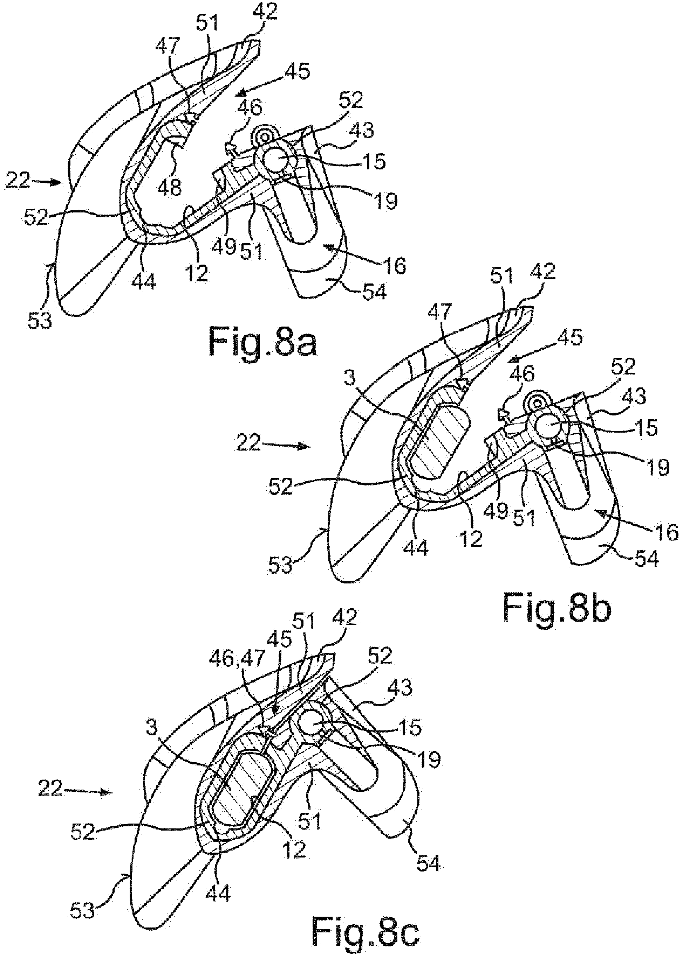

- Fig. 8a-8c: jeweilige Schnittansichten durch das Funktionselement gemäß den Figuren 6a bis 7, wobei Fig. 8a analog zu Fig. 6a die beiden Teile des Funktionselements in geöffnetem Zustand zeigt, Fig. 8b das Funktionselement mit den beiden Teilen in an der Wischerstange angeordneter, aber noch nicht geschlossener Position zeigt, und Fig. 8c die beiden Teile des Funktionselements nach der Befestigung an der Wischerstange darstellt;

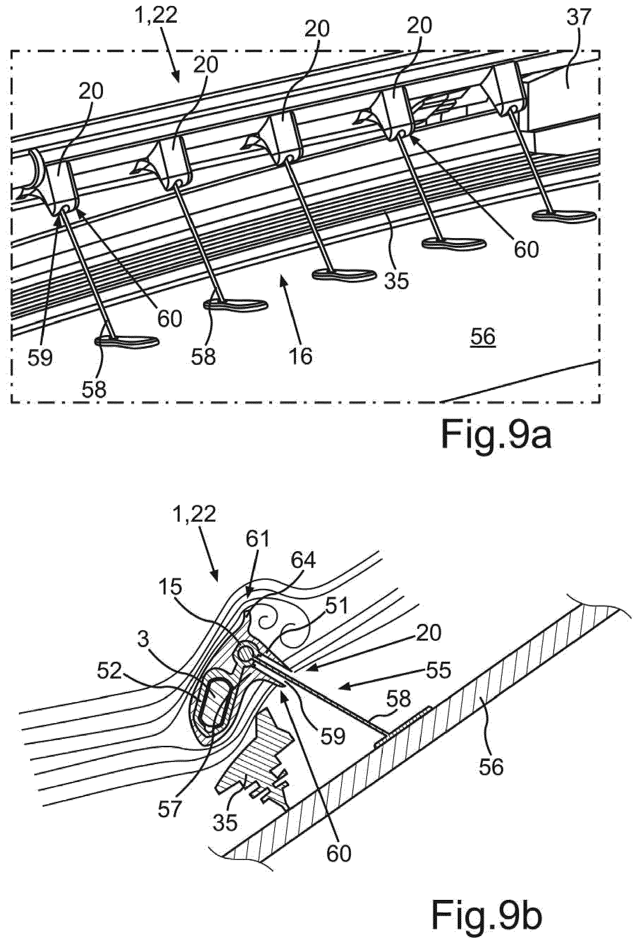

- Fig. 9a, 9b: eine ausschnittsweise Perspektivansicht sowie eine Schnittansicht auf ein erfindungsgemäßes Funktionselement in Form eines Windabweisers mit der darin integrierten Scheibenreinigungseinrichtung und einer Mehrzahl von Düsen zum Reinigen der Scheiben, welche jeweils zugehörigen Höcker auf der dem Wischblatt bzw. der Scheibe zugewandten Seite des Windabweisers angeordnet ist erhaben in Richtung der Scheibe absteht, wobei ein Strahl an Reinigungsflüssigkeit über einen Schutzkanal ausgehend von der Düse an einer der Scheibe zugewandten Vorderseite des Windleitelements bzw. Höckers in Richtung der Scheibe austritt; und

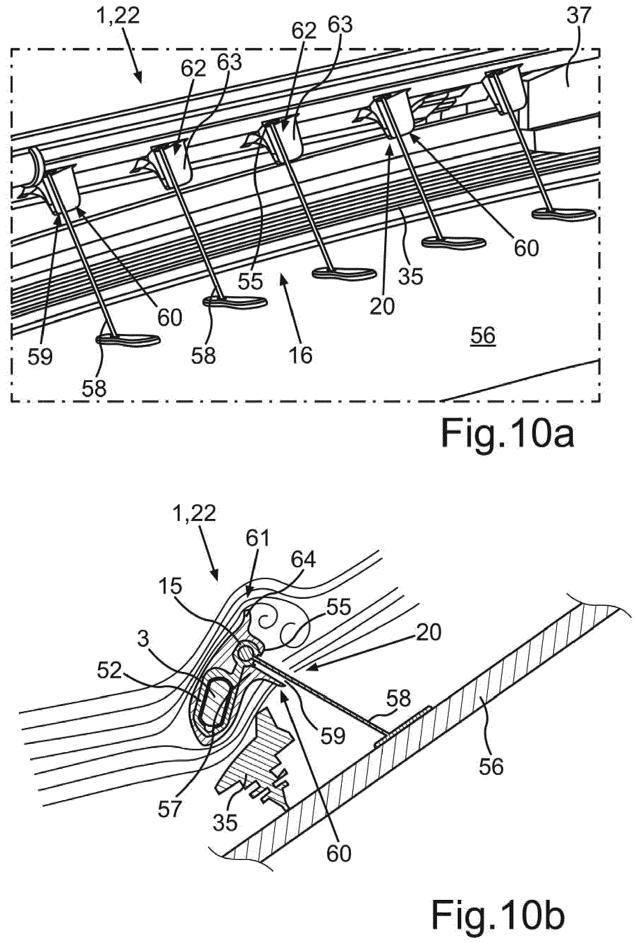

- Fig. 10a, 10b: eine weitere Perspektivansicht sowie eine Schnittansicht durch einen Windabweiser gemäß einer alternativen Ausführungsform, bei welcher die jeweiligen Düsen in Richtung der Luftströmung hinter den zugeordneten Windleitelementen bzw. Höckern angeordnet sind, wodurch ein jeweiliger Strahl an Reinigungsflüssigkeit im Windschatten des jeweiligen Höckers in Richtung der Scheibe gelangt.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

Die Figuren 1a, 1b und 1c zeigen in einer jeweiligen Perspektivansicht einen Montageablauf zur Anordnung und Fixierung eines im Weiteren noch näher erläuterten Funktionselements 1 an einem Wischerarm 2. Der Wischerarm 2 und das Funktionselement 1 sind hierbei in Fig. 1a zunächst explosionsartig getrennt dargestellt.

Hierbei ist insbesondere erkennbar, dass der Wischerarm 2 eine Wischerstange 3 umfasst, welche in einem Knickbereich 4 winkelig ausgebildet ist. Auf einer einem freien Ende 5 entgegengesetzten Seite ist die Wischerstange 3 mit einem Federkasten 6 fest verbunden, welcher einem Anschlussbereich 7 zumindest im Wesentlichen im Querschnitt rechteckförmig ausgebildet und auf die im Querschnitt zumindest im Wesentlichen ebenfalls rechteckförmige Wischerstange 3 aufgecrimpt ist. Der Federkasten 6 ist über Lageröffnungen 8 gelenkig mit einem nicht dargestellten Hebelelement der Scheibenwischanlage, welches gelegentlich auch als Befestigungsteil bezeichnet wird, verbunden, welches seinerseits mit einer zugehörigen Antriebswelle eines Antriebsmotors drehfest verbunden ist. Um die durch die Lagerzapfen 8 gebildete Achse ist der Wischerarm 2 gegenüber dem zugehörigen Hebelelement gegen die Federkraft eines Federelements verschwenkbar, welches seinerseits in eine Federaufnahme 9 am korrespondierenden Ende der Wischerstange 3 einhängbar ist, um beispielsweise in der Betriebsstellung den Wischerarm 2 bzw. ein zugehöriges Wischerblatt gegen die Oberfläche einer Frontscheibe zu drücken.

Das Funktionselement 1 weist einen ersten Teilbereich 10 und einen einteilig mit diesem ausgebildeten zweiten Teilbereich 11 auf, innerhalb welchen ein durchgängiger Aufnahmekanal 12 für die Wischerstange 3 vorgesehen ist.

Der Aufnahmekanal 12 ist dabei im Querschnitt zumindest im Wesentlichen an den etwa rechteckförmigen Querschnitt der Wischerstange 3 angepasst, welche über ihren gesamten Verlauf einen zumindest im Wesentlichen einheitlichen Querschnitt aufweist. Demzufolge weist auch der Aufnahmekanal 12 über seine gesamte Länge innerhalb des Funktionselements 1 einen im Wesentlichen einheitlichen Querschnitt auf.

Wie im Weiteren in Zusammenschau mit den Figuren 1b und 1c erkennbar ist, ist das Funktionselement 1 demzufolge vom freien Ende 5 her auf die Wischerstange 3 aufsteckbar bzw. aufschiebbar, bis ein Ende 13 des ersten Teilbereichs 10 des Funktionselements 1 zumindest im Wesentlichen bündig an den Anschlussbereich 7 des Federkastens 6 anschließt. Damit ein Aufstecken des Funktionselements 1 auf die Wischerstange 3 bis zum Federkasten 6 erfolgen kann, ist das Funktionselement 1 im ersten Teilbereich 10 - ausgehend vom Ende 13 - zumindest über den Knickbereich 4 hinweg aus einem elastischen Material, beispielsweise einem entsprechenden Kunststoff, hergestellt. Durch dieses weichelastische Material ist es gegebenenfalls auch denkbar, dass der Anschlussbereich 7 des Federkastens 6 muffenartig vom Ende 13 des Teilbereichs 10 des Funktionselements 1 überragt wird.

Das Ende 13 des Teilbereichs 10 wird zudem überragt von einem Leitungsteil 14, über welchen das Funktionselement 1 auf im Weiteren noch näher beschriebene Weise mit einer Scheibenreinigungsflüssigkeit versorgt werden kann. Innerhalb des Leitungsteils 14 ist demzufolge wenigstens ein Versorgungskanal 15 für Scheibenreinigungsflüssigkeit ausgebildet, über welchen das Funktionselement 1 auf im Weiteren noch näher beschriebene Weise mit Scheibenreinigungsflüssigkeit versorgt werden kann. Dieser Versorgungskanal 15 erstreckt sich im Weiteren auch über den Teilbereich 10 sowie über den Teilbereich 11 des Funktionselements 1. Demzufolge ist in das Funktionselement 1 eine Scheibenreinigungseinrichtung 16 bzw. ein Teil von dieser ausgebildet, sodass es sich im vorliegenden Fall bei dem Wischerarm 2 um einen sogenannten Nasswischerarm handelt. Dies bedeutet, die mittels der Scheibenwischanlage zu reinigende Scheibe, insbesondere Frontscheibe des Kraftwagens, über Düsen mit Scheibenreinigungsflüssigkeit beaufschlagt werden kann, welche von dem Wischerarm 2 getragen sind. Das Ende des Leitungsteils 14 des Funktionselements 1 ist dabei über eine nicht weiter gezeigte Kanalanordnung mit einem der Scheibenreinigungsanlage für Scheibenreinigungsflüssigkeit nebst zugehöriger Pumpe verbunden. Üblicherweise ist diese im Frontraum bzw. Motorraum des Kraftwagens untergebracht. Wie insbesondere aus Fig. 1c erkennbar ist, verläuft das Leitungsteil 14 im vorliegenden Fall unterseitig der Wischerstange 3 bis in das Innere des Federkastens 6 weiter.

In Zusammenschau der Figuren 1a bis 1c ist des Weiteren erkennbar, dass das Aufschieben des Funktionselements 1 auf die Wischerstange 3 so weit erfolgt, dass diese - wie dies aus Fig. 1c in der endgültig montierten Position des Funktionselements 1 erkennbar ist - an einem freien Ende 5 über einen erheblichen Längenbereich aus dem Aufnahmekanal 12 herausragt. Dies bedeutet umgekehrt, dass das Funktionselement 1 mit den Teilbereichen 10, 11 über den Aufnahmekanal 12 mit einem vom freien Ende 5 der Wischerstange 3 beabstandeten Längenbereich der Wischerstange 3 verbunden ist.

Mit anderen Worten ragt das freie Ende 5 über den Teilbereich 11 des Funktionselements 1 hinaus beziehungsweise aus dem Aufnahmekanal 12 heraus.

Die in das Funktionselement 1 integrierte Scheibenreinigungseinrichtung 16 umfasst vorliegend ein Kanalsystem mit jeweiligen, in das Funktionselement 1 integrierten Kanälen, welche an diverse Düsen münden, über welche die zu reinigende bzw. zu wischende Scheibe bzw. das im Weiteren noch näher erläuterte zugehörige Wischerblatt mit Scheibenreinigungsflüssigkeit beaufschlagt werden können.

So umfasst die Scheibenreinigungseinrichtung 16 zunächst zwei Außenkreisdüsen 17, 18, über welche das Wischerblatt im Nahbereich seines Au-βenkreises, also demjenigen Bereich, in welchem das Wischerblatt den größten Radius seiner zu wischenden Fläche durchläuft, beaufschlagt wird.

Die Außenkreisdüse 17 deckt dabei einen zu dem Funktionselement 1 näheren Bereich und die Außenkreisdüse 18 einen von dem Funktionselement 1 noch weiter entfernten Bereich nahe des Außenkreises des korrespondierenden Wischerblattes ab.

Außerdem umfasst die Scheibenreinigungseinrichtung 16 eine Mehrzahl von vorliegend fünf mittleren Düsen 19, welche sich allesamt zumindest im Wesentlichen in einer Reihe entlang der Erstreckungsrichtung des Funktionselements 1 erstrecken. Die jeweiligen Düsen 19 sind auf im Weiteren noch beschriebene Weise in jeweils zugehörigen, vom Funktionselement 1 bzw. vom Wischerarm 2 in Richtung der zu wischenden und zu reinigenden Scheibe abstehenden Höckern 20 untergebracht. Schließlich umfasst die Scheibenreinigungseinrichtung 16 wenigstens eine Innenkreisdüse 21, über welche das Wischerblatt des Wischerarms 2 im Bereich seines Innenkreises mit Reinigungsflüssigkeit versorgt wird, in welchem das Wischerblatt beim Wischvorgang seinen kürzesten Radius der korrespondierenden Wischfläche durchläuft. Alle Düsen 17, 18, 19 und 21 können dabei so eingestellt werden, dass diese bei einer Startbewegung, also im Falle einer Frontscheibe bei einer Aufwärtsbewegung des jeweiligen Wischerarms 2, die Reinigungsflüssigkeit in einem entsprechenden Abstand vor dem sich dahin bewegenden Wischerblatt auf die Scheibe, insbesondere die Frontscheibe, aufbringen. Gegebenenfalls kann auch das Wischerblatt mit der Scheibenreinigungsflüssigkeit unmittelbar beaufschlagt werden.

Neben der Integration der Scheibenreinigungseinrichtung 16 umfasst das Funktionselement 1 die weitere Funktion der Windabweisung. Demzufolge ist das Funktionselement 1 im vorliegenden Fall als Windabweiser 22 ausgebildet und umfasst auf der zumindest im Wesentlichen den Düsen 19 sowie der Wischerstange 3 abgewandten Vorder- bzw. Oberseite eine Windabweiskontur 23, um demzufolge ein besonders günstiges Überströmen der üblicherweise von vorne den jeweiligen Wischerarm 2 bzw. das korrespondierende Wischerblatt anströmende Luft zu ermöglichen.

Das vorliegende Funktionselement 1 ist also als Windabweiser 22 und zur Integration der Scheibenreinigungseinrichtung 16 ausgebildet. Als im Rahmen der Erfindung mitumfasst ist es jedoch zu betrachten, dass das Funktionselement 1 auch lediglich eine dieser beiden Funktionen wahrnehmen könnte.

Die Figuren 2a bis 2c zeigen in jeweiligen ausschnittsweisen und perspektivischen Unteransichten das Funktionselement 1 der in den Figuren 1a bis 1c beschriebenen Ausführungsform. Aus Fig. 2a ist dabei insbesondere der Aufnahmekanal für die Wischerstange 3 erkennbar, welche von einem dritten Teilbereich 24 des Funktionselements 1, welches mit den Teilbereichen 10 und 11 ebenfalls einteilig ausgebildet ist. Die Figuren 2b und 2c zeigen dabei die Position des Funktionselements 1, wenn dieses vollständig auf die Wischerstange 3 aufgesteckt ist. In dieser Position überdeckt der dritte Teilbereich 24 des Funktionselements 1 das freie Ende 5 der Wischerstange 3 insbesondere - bezogen auf die Einbaulage des Wischerarms 2 - an dessen Vorderseite und an dessen Unterseite. Ferner ist erkennbar, dass die Wischerstange 3 gegenüber dem Teilbereich 24 zurückspringend angeordnet ist.

Anhand einer Zusammenschau der Figuren 2a und 2b mit derjenigen gemäß Fig. 2c ist zudem erkennbar, dass im vorliegenden Fall das Funktionselement 1 mittels einer Befestigungseinrichtung 25 in Erstreckungsrichtung des Aufnahmekanals 12 gesichert an der Wischerstange 3 des Wischerarms 2 angeordnet ist. Die Sicherung erfolgt im vorliegenden Fall mittels einer Lasche 26, welche über ein Filmscharnier 27 schwenkbar an dem Funktionselement 1 angeordnet ist. Wird die Lasche 26 mittels eines Rastelements 28 in eine hierfür vorgesehene Rastaufnahme 29 im Bereich des Aufnahmekanals 12 eingesteckt, so kommt das Rastelement 28 auch mit einer Nut 30 (Fig. 1a) innerhalb der Wischerstange 3 in Eingriff. Hierdurch ergibt sich quasi eine Axialsicherung des Funktionselements 1 an der Wischerstange 3, sodass das Funktionselement 1 nach dem Aufschieben auf die Wischerstange 3 entsprechend lagegesichert ist.

Die Befestigungseinrichtung 25 ist in den Figuren 3a und 3b in einer jeweiligen Schnittansicht der Anordnung des Funktionselements 1 an der Wischerstange 3 nochmals in ihrer Funktionsweise erläutert. Hierbei ist insbesondere erkennbar, wie sich die axiale Sicherung des Rastelements 28 auf Seiten der Lasche 26 innerhalb der Rastaufnahme 29 bzw. an der Nut 30 der Wischerstange 3 ergibt.

Aus den Figuren 3a und 3b wird anhand der unterschiedlichen Schraffuren außerdem deutlich, dass das Funktionselement 1 vorliegend als Kunststoffteil in einem Zweikomponenten-Verfahren, beispielsweise einem Zweikomponenten-Spritzgussverfahren, hergestellt ist. Insbesondere ist hierbei erkennbar, dass der Aufnahmekanal 12 im Bereich der Befestigungseinrichtung 25 durch eine Hartkomponente 31 gebildet ist. Ebenso sind die jeweiligen - die Reinigungsflüssigkeit führenden Kanäle im zweiten und dritten Teilbereich 11, 24 des Funktionselements 1 aus dieser Hartkomponente 31 - zumindest im Bereich der jeweiligen Düsen 17, 18, 19, 21 gebildet. Dazwischen können auch Teile durch eine Weichkomponente 32 des Kunststoffs gebildet werden, welche im Übrigen auch - wie bereits erläutert - den ersten Teilbereich 10 und den Leitungsteil 14 bilden. Durch die Weichkomponente 32 ist auch - wie dies aus den Figuren 3a und 3b erkennbar ist - die Windabweiserkontur 23 des Funktionselements 1 ausgebildet. Die Komponenten 31, 32 sind dabei insbesondere UV-beständig ausgebildet, um entsprechend dauerhaft haltbar zu sein.

In den Figuren 4a und 4b ist in einer jeweiligen Perspektivansicht eine alternative Ausführungsform des Funktionselements 1 dargestellt. Dieses Funktionselement 1 ist in seiner Ausgestaltung und Funktion im Wesentlichen identisch mit demjenigen gemäß dem ersten beschriebenen Ausführungsbeispiel, sodass im Weiteren nur auf die Unterschiede eingegangen werden soll. Im Wesentlichen unterscheidet sich dieses Funktionselement 1 dadurch, dass bei diesem der erste Teilbereich 10 des Funktionselements 1, welcher sich zwischen dem zweiten Teilbereich 11 und dem Anschlussbereich 7 des Federkastens 6 erstreckt, hier nicht vorgesehen ist. Vielmehr endet das Funktionselement 1 mit einem Ende 33 in einem Abstand vor dem Knickbereich 4 und demzufolge in einem erheblichen Abstand vor dem Anschlussbereich 7 des Federkastens 6. Das Leitungsteil 14 des Funktionselements 1 erstreckt sich demzufolge über eine erhebliche Länge ohne zusätzliche Ummantelung der Wischerstange 3 unterhalb bzw. innenseitig von dieser bis in den Federkasten 6 hinein, von wo aus die weitere Verbindung zur Versorgung mit der Reinigungsflüssigkeit erfolgt.

Je nachdem, wie kurz das Funktionselement 1 ausgebildet ist, kann gegebenenfalls bei einigen Ausführungsformen auf eine oder mehrere jeweilige Innenkreisdüsen 21 verzichtet werden. Eine solche Ausgestaltung ergibt sich beispielsweise bei Fahrzeugen der Kompaktklasse, bei welchen eine relativ geringe Scheibenfläche gewischt beziehungsweise gereinigt werden braucht. Auch auf einer jeweiligen Beifahrerseite einer größeren Scheibe bietet sich gegebenenfalls ein derartiges Konzept an. Im Übrigen weist die in das Funktionselement 1 integrierte Scheibenreinigungseinrichtung 16 eine zu der bereits im Zusammenhang mit den Figuren 1a bis 3b beschriebenen Ausführungsform zumindest im Wesentlichen identische Ausgestaltung auf. Allerdings können - je nach Länge des Funktionselements 1 bzw. insbesondere der Teilbereiche 11 und 24 - eine geringere Anzahl von mittleren Düsen 19 vorgesehen sein. Auch im vorliegenden Ausführungsbeispiel ist wiederum das Rastelement 28 erkennbar, mittels welchem das Funktionselement 1 nach dem Aufstecken auf die Wischerstange 3 gesichert werden kann.

In den Figuren 5a und 5b ist schließlich in einer jeweiligen Perspektivansicht die Montage eines Wischerblatts 34 an dem korrespondierenden freien Ende 5 der Wischerstange 3, welches aus dem Aufnahmekanal 12 des Funktionselements 1 herausragt, dargestellt. Das Wischerblatt 34 umfasst dabei ein Wischerblattelement 35, an welchem ein Grundkörper in Form eines Reiters 36 befestigt ist. Dieser Reiter 36 ist wiederum gelenkig mit einem Adapter 37 verbunden, sodass das Wischerblattelement 35 mit dem Reiter 36 relativ zu dem Adapter 37 in gewissen Grenzen verschwenkt werden kann. Der Adapter 37 umfasst eine im vorliegenden Fall zumindest teilweise offen ausgebildete Aufnahme 38, über welche der Adapter 37 bzw. somit das gesamte Wischerblatt 34 am freien Ende 5 der Wischerstange 3 aufgesteckt werden kann. Hierzu ist die Aufnahme 38, welche als eine Art Steckaufnahme ausgebildet ist, in ihrem Querschnitt bzw. in ihrer Form auf den Querschnitt der Wischerstange 3 abgestimmt. Nachdem der Adapter 37 mit der Aufnahme 38 über einen bestimmten Längenbereich auf das freie Ende 5 der Wischerstange 3 aufgesteckt ist, kommt eine Rasteinrichtung 39 in Eingriff, welche sowohl auf Seiten des Adapters 37 als auch auf Seiten der Wischerstange 3 ein entsprechendes Rastelement umfasst. Diese Rasteinrichtung 39 kann beispielsweise auf Seiten des Adapters 37 einen Rastzapfen oder dergleichen umfassen, welcher mit einer Rastvertiefung auf Seiten des freien Endes 5 der Wischerstange 3 in Eingriff kommt. Die Rasteinrichtung 39 ist dabei mittels eines Betätigungselements 40 in Form eines Druckknopfs oder dergleichen lösbar, welcher im vorliegenden Fall in Richtung des Wischerblattelements 39 gedrückt werden muss.

In seiner verrasteten Position durchragt dieses Betätigungselement 40 eine Durchgangsöffnung 42 innerhalb des Teilbereichs 24 des Funktionselements 1. In der verrasteten Position der Rasteinrichtung 39 ist somit das Betätigungselement 40 zumindest im Wesentlichen innerhalb dieser Durchgangsöffnung 41 angeordnet und kann demzufolge von vorne außen betätigt werden, um das Wischerblatt 34 vom freien Ende 5 der Wischerstange 3 abzunehmen.

Da somit das Funktionselement 1 in einem vom freien Ende 5 beabstandeten Längenbereich der Wischerstange 3 an dieser befestigt ist und der Adapter 37 des Wischerblatts 34 am freien Ende 5 der Wischerstange befestigt ist, ergibt sich für das Funktionselement 1 und das Wischerblatt 34 eine vollkommen unabhängige jeweilige Anordnung und Fixierung an der Wischerstange 3. Dies hat den Vorteil, dass das Wischerblatt 34 vollkommen unabhängig von dem Funktionselement 1 abgenommen und beispielsweise von Zeit zu Zeit ausgetauscht werden kann, ohne dass dies Einfluss auf die Funktionsweise des Funktionselements 1 hat. Insbesondere ist dabei zu berücksichtigen, dass sowohl die Windabweisfunktion als auch die Scheibenreinigungsfunktion des Funktionselements 1 vollkommen erhalten bleibt, auch wenn der Adapter 37 abgenommen wird, das Funktionselement 1 jedoch an der Wischerstange 3 verbleibt. Im Unterschied zu anderen Systemen wird somit mit dem Austausch des Wischerblatts 34 nicht ein Teil der Windabweiseinrichtung oder der Scheibenreinigungseinrichtung mitabgenommen und beispielsweise entsorgt, was entsprechende finanzielle und hinsichtlich der Nachhaltigkeit entstehende Probleme aufwirft. Vielmehr ist somit ein System geschaffen, bei welchem die Anbindung des Wischerblatts 34 und die Anbindung des Funktionselements 1 sowie die Durchführung der durch das Funktionselement 1 bewerkstelligten Funktionen völlig autark voneinander sind.

Im Funktionselement 1 können darüber hinaus weitere Elemente integriert sein. Insbesondere kann auch eine Heizung für die Scheibenreinigungseinrichtung mitintegriert sein. Auch hier ergeben sich die bereits im Zusammenhang mit der Scheibenreinigungseinrichtung beschriebenen Vorteile.

In den Figuren 6a und 6b ist in einer jeweiligen Perspektivansicht eine weitere, alternative Ausführungsform des Funktionselements 1 dargestellt. Auch dieses Funktionselement 1 ist in seiner Ausgestaltung und Funktion im Wesentlichen identisch mit demjenigen gemäß dem ersten beschriebenen Ausführungsbeispiel, sodass im Weiteren nur auf Unterschieden eingegangen werden soll. Im Wesentlichen unterscheidet sich dieses Funktionselement 1 dadurch, dass es aus zwei Teilen 42, 43 zusammengesetzt ist, welche nach Art eines Filmscharniers in einem Bereich 44 einteilig miteinander verbunden sind. Gegebenenfalls wäre hier auch eine vollständig zweiteilige oder mehrteilige Variante denkbar.

In Zusammenschau mit den Figuren 8a bis 8c, welche eine jeweilige Querschnittansicht durch das Funktionselement 1 bzw. die Wischerstange 3 zeigen, wird dabei ersichtlich, in welcher Weise die Anordnung und Fixierung der beiden Teile 42, 43 bzw. des Funktionselements 1 insgesamt an der Wischerstange 3 erfolgt. Gemäß den Figuren 6a bzw. 8a wird dabei das Funktionselement 1 bei geöffneten Teilen 42, 43 auf die Wischerstange 3 aufgeschoben und/oder aufgesteckt bis die Wischerstange 3 - wie dies insbesondere aus Fig. 8b erkennbar ist - in ihrem vorgesehenen Aufnahmekanal 12, welcher analog zu den Aufnahmekanälen 12 gemäß den ersten beiden Ausführungsformen ausgebildet ist, angeordnet ist. Mit anderen Worten sind die beiden Teile 42, 43 des Funktionselements 1 beziehungsweise des Windabweisers 22 in unterteiltem Zustand an der Wischerstange 3 des Wischerarms 2 montierbar.

Im Anschluss daran können die beiden Teile 42, 43 dann um die durch das Filmscharnier 44 oder dergleichen gebildete Achse gegeneinander verschwenkt und zusammengefügt werden, bis im vorliegenden Fall die Teile 42, 43 mittels der Befestigungseinrichtung 45 auf der dem Filmscharnier 44 abgewandten Seite miteinander verbunden werden. Die Befestigungseinrichtung 45 umfasst hierbei am einen Teil 43 ein oder mehrere Rastelemente 46, welche - wie dies insbesondere aus Fig. 8c ersichtlich ist - mit jeweils einer oder mehreren korrespondierenden Rastelementen in Form von Rastaufnahmen 47 in Eingriff kommen. Somit wird durch das Zusammenfügen der beiden Teile 42, 43 der Windabweiser 22 an dem Bauelement 3 des Wischerarms 2 der Scheibenwischanlage festgelegt.

An beiden Teilen 42, 43 ist außerdem eine jeweilige Sicherungsnase 48, 49 angeordnet, welche - wie dies aus Fig. 7 erkennbar ist - mit einer Nut 50 in der Wischerstange 3 in Eingriff kommen. Die Sicherungsnasen 48, 49 wirken in ihrem Zusammenspiel mit der Nut 50 somit als Axialsicherung der Befestigungseinrichtung 45, um eine Verschieben des Funktionselements 1 in Erstreckungsrichtung der Wischerstange 3 zu vermeiden.

Im vorliegenden Fall sind die jeweiligen Rastelelemente beziehungsweise Rastaufnahmen 46, 47 zur Verbindung der beiden Teile 42, 43 in der elastischen Kunststoffkomponente 51 des Windabweisers 22 ausgebildet. Die jeweiligen Sicherungsnasen 48, 49 zur Fixierung des Funktionselements 1 an der Wischerstange 3 sind in der harten Kunststoffkomponente 52 des Windabweisers 22 ausgebildet.

Die geteilte Ausführung dieses Funktionselements 1 mit den Teilen 42 und 43 bietet den Vorteil, dass das Funktionselement 1 auf einfache Weise an der Wischerstange 3 fixiert werden kann, auch wenn die Wischerstange 3 beispielsweise einen nicht geradlinigen Verlauf bzw. einen Knickbereich 4 aufweist. Das Funktionselement 1 kann sich dabei sowohl bis an den Federkasten 6 bzw. an dessen Anschlussbereich 7 erstrecken als auch in einem Abstand zu diesem Anschlussbereich 7 enden. Vorliegend erstrecken sich die beiden Teile 42, 43 bis über den Knickbereich 4 der Wischerstange 3 hinaus bis an den Federkasten 6.

Insbesondere aus den Figuren 8a bis 8c ist außerdem erkennbar, dass - wie bei den vorangegangenen Ausführungsbeispielen - das Funktionselement 1 teilweise aus einer elastischen Kunststoffkomponente 51 und teilweise aus einer harten Kunststoffkomponente 52 gebildet ist. Die Aufnahme bzw. der Aufnahmekanal 12 sind im vorliegenden Fall zumindest im Teilbereich 11, jedoch beispielsweise auch im Teilbereich 10, aus der harten Kunststoffkomponente 52 gebildet, um somit eine besonders feste und sichere Anordnung des Funktionselements 1 an der Wischerstange 3 zu erhalten. Mit anderen Worten ist die Aufnahme beziehungsweise der Aufnahmekanal 12 durch beide Teile 42, 43 des Windabweisers 22 unterteilt.

Außerdem sind im vorliegenden Fall zumindest im Wesentlichen wiederum alle Flüssigkeit führenden Bauteile der Scheibenreinigungseinrichtung 16, also beispielsweise der Versorgungskanal 15 sowie die jeweiligen Düsen 17, 18, 19, 21 aus der harten Kunststoffkomponente 52 gebildet. Die die Reinigungsflüssigkeit führenden Bauteile der Scheibenreinigungseinrichtung 16 sind somit besonders formstabil und dicht ausgeführt. Die Scheibenreinigungseinrichtung 16 ist dabei allerdings - wie dies insbesondere aus den Figuren 8a bis 8c erkennbar ist - zumindest im Wesentlichen vollständig in die elastische Kunststoffkomponente 51 integriert.

Zudem ist im vorliegenden Ausführungsbeispiel die Scheibenreinigungseinrichtung 16 in lediglich eines der beiden Teile 42, 43 des Windabweisers 22 integriert. Dies hat insbesondere Vorteile hinsichtlich der Dichtheit, da keine Reinigungsflüssigkeit führenden Bauteile der beiden Teile 42, 43 miteinander verbunden werden müssen.

Insbesondere ist - bezogen auf die Einbauposition des Funktionselements 1 beziehungsweise des Windabweisers 22 - eine Oberfläche 53 auf seiner Sichtseite zumindest im Wesentlichen vollständig durch die elastische Kunststoffkomponente 51 gebildet. Hierdurch ergibt sich eine optisch besonders günstige Anmutung und überdies ein Funktionselement 1, welches besonders gut vor Schlägen, Stößen oder dergleichen geschützt ist. Die elastische Kunststoffkomponente 51 ist dabei vorzugsweise aus einem UVbeständigen Material gebildet, um entsprechend langlebig zu sein. Zudem weist die elastische Kunststoffkomponente 51 Höckern 54 auf, welche beispielsweise als Dämpfer dienen, um das Funktionselement 1 beziehungsweise den Windabweiser 22 sowie die Oberfläche der zu reinigenden Scheibe zu schützen.

Fig. 9a zeigt in einer ausschnittsweisen Perspektivansicht das Funktionselement 1 in Form des Windabweisers 22, wie dieser bei all den vorstehend beschriebenen Ausführungsformen zum Einsatz kommen kann. In Zusammenschau mit Fig. 9b, welche eine Schnittansicht des Windabweisers 22 sowie des Wischerblattelements 35 des Wischerblatts 34 zeigt, wird dabei insbesondere erkennbar, dass jeweilige Windleitelemente in Form der Höcker 20 in einer linearen Reihe bezogen auf eine Erstreckungsrichtung des Windabweisers 22 an dessen dem Wischerblatt 34 bzw. zu reinigenden bzw. zu wischenden Scheibe 56 angeordneten Seite vorgesehen sind. Die jeweiligen Höcker 20 müssen dabei nicht zwingendermaßen in einer linearen Reihe angeordnet sein, sondern können natürlich auch in anderer Form in einer Reihe angeordnet sein. Ebenfalls ist es natürlich prinzipiell auch denkbar, lediglich einen Höcker 20 vorzusehen.

Wie nun insbesondere in Zusammenschau der Figuren 9a und 9b erkennbar ist, ist im Bereich einer jeweiligen Düse 19 jeweils einer der Höcker 20 angeordnet. Genauer gesagt ist im vorliegenden Ausführungsbeispiel jeweils eine der Düsen 19 in den zugeordneten Höcker 20 integriert bzw. in einem Fußbereich 57 des jeweiligen Höckers angeordnet. Wie bereits erläutert worden ist, ist die jeweilige Düse 19 dabei im Bereich der entsprechenden, harten Kunststoffkomponenten 52 des Windabweisers integriert. An die jeweilige Düse schließt sich dabei - in Austrittsrichtung eines Strahls 58 an Reinigungsflüssigkeit - ein Schutzkanal 59 an, welcher im Querschnitt gegenüber der Düse bzw. dem Düsenaustritt und somit auch gegenüber dem Querschnitt des Strahls 58 vergrößert ist. Der Schutzkanal 59 soll demzufolge den Strahl 58 an Reinigungsflüssigkeit nicht ablenken, sondern vielmehr vor einer Luftströmung 60, welche unterseitig des Windabweisers 22 bzw. oberseitig des Wischerblatts 35 hindurch gelangt, schützen. Der Schutzkanal 59 tritt dabei an einer der Scheibe 56 zugewandten Vorderseite 60 des Höckers 20 aus bzw. mündet dort. In einer alternativen Ausführungsform wäre es gegebenenfalls auch denkbar, die Düse 19 direkt im Bereich dieser Vorderseite 60 zu positionieren, also den Schutzkanal 59 gegebenenfalls wegzulassen. Allerdings sorgt der Schutzkanal 59 dafür, dass der Strahl 58 an Reinigungsflüssigkeit sauber und direkt in Richtung der Oberfläche der Scheibe 56 gelangt.

In Fig. 9b ist überdies die Luftströmung 61 dargestellt, welche mittels der Windabweiserkontur 23 des Windabweisers 22 entsprechend über bzw. unter dem Windabweiser 22 vorbei gelangt.

Die Windabweiserkontur 23 umfasst dabei an einer Oberseite 61 des Windabweisers 22 eine Abrisskante 64, welche einen Radius von vorzugsweise kleiner 2 mm aufweist. Hierdurch wird einerseits eine besonders günstige Überströmung des Windabweisers 22 bzw. des gesamten Wischerarms 2 mit dem Wischerblatt 34 erreicht und gleichzeitig eine besonders günstige Positionierung und Halterung des Wischerarms 2 und des Wischerblatts 34 an der Oberfläche der Scheibe 56 über alle Fahrgeschwindigkeiten hinweg.

Die Figuren 10a und 10b zeigen in einer jeweils analogen Perspektivansicht bzw. Schnittansicht eine alternative Ausführungsform der jeweiligen Windleitelemente bzw. Höcker 20. Diese zeichnen sich dadurch aus, in Richtung der Luftströmung hinter dem jeweils zugeordneten Windleitelement bzw. Höcker 20 angeordnet sind und an der jeweiligen Unterseite 55 münden. Mit anderen Worten befinden sich die Düsen 19 im vorliegenden Fall zumindest im Wesentlichen an der Unterseite 55 bzw. im Nahbereich dieser Unterseite 55 des Windabweisers 22. Außerdem ist erkennbar, dass die jeweiligen Höcker auf der der Düse 19 jeweils zugewandten Seite 62 eine im Querschnitt bogenförmige Kontur 63 aufweisen, welche den jeweils aus der Düse 19 austretenden Strahl 58 an Reinigungsflüssigkeit in einem entsprechenden Abstand vorderseitig umgibt. Somit wird im vorliegenden Fall durch den jeweiligen Höcker 20 erreicht, dass der Strahl 58 an Reinigungsflüssigkeit jeweils im Windschatten des zugeordneten Höckers 20 aus der Düse 19 bzw. aus der Unterseite 55 des Windabweisers 22 in Richtung der Scheibe 56 austreten kann. Durch die von der jeweiligen Luftströmung geschützte Anordnung der Düsen 19 hinter den jeweiligen Höckern 20 ist somit auch im vorliegenden Fall eine gleichmäßige und zuverlässige Benetzung der Oberfläche der Scheibe 56 mit Reinigungsflüssigkeit gewährleistet.

Auch im vorliegenden Fall sind die Höcker 20 aus der weichen Kunststoffkomponente 51 gebildet, wohingegen die Düsen wiederum durch die harte Kunststoffkomponente gebildet sind.

Insgesamt ist somit erkennbar, dass im vorliegenden Fall ein Windabweiser 22 mit einer Reihe jeweiliger Windleitelemente in Form von Höckern 20 geschaffen ist, welche in einem jeweiligen Abstand zueinander angeordnet sind, sodass sich einerseits aerodynamisch eine besonders günstige Luftströmung ohne übermäßigen Düseneffekt hinter den Höckern 20 einstellt, sodass andererseits ein jeweils aus den im Bereich der Höcker 20 aus den jeweiligen Düsen 19 austretender Strahl 58 direkt und gleichmäßig auf die Oberfläche der zu benetzenden Scheibe 56 gelangt.

## Patentansprüche

1. Windabweiser (22) für eine Scheibenwischanlage eines Kraftwagens, in welchen eine Scheibenreinigungseinrichtung (16) mit wenigstens einer Düse (19) zum Reinigen einer Scheibe (56) integriert ist, und welcher eine Windabweiserkontur (23) umfasst, mittels welcher eine Luftströmung im Bereich eines zugeordneten Wischerarms (2) und eines Wischerblatts (34) leitbar ist, wobei der Windabweiser (22) auf seiner dem Wischerblatt (34) zugewandten Seite (62) wenigstens ein Windleitelement bzw. einen Höcker (20) umfasst, welches im Bereich der zugeordneten Düse (19) angeordnet ist und erhaben in Richtung der Scheibe (56) absteht, wobei die Düse (19) in das zugeordnete Windleitelement bzw. in den zugeordneten Höcker (20) integriert ist,
**dadurch gekennzeichnet, dass**
in das Windleitelement bzw. in den Höcker (20) ein gegenüber der Düse (19) im Querschnitt vergrößerter Schutzkanal (59) integriert ist.

2. Windabweiser (22) nach Anspruch 1,
**dadurch gekennzeichnet, dass**
die Düse (19) beziehungsweise der Schutzkanal (59) an einer der Scheibe (56) zugewandten Vorderseite (60) des Windleitelements (Höcker 20) münden.

3. Windabweiser (22) nach einem der vorhergehenden Ansprüche,
**dadurch gekennzeichnet, dass**
das Windleitelement bzw. der Höcker (20) aus einer elastischen Kunststoffkomponente (51) gebildet ist.

4. Windabweiser (22) nach einem der vorhergehenden Ansprüche,
**dadurch gekennzeichnet, dass**
an einer Oberseite (61) des Windabweisers (22) eine Abrisskante (64) vorgesehen ist und dass die Abrisskante (64) einen Radius von kleiner 2 mm aufweist.

5. Windabweiser (22) nach einem der vorhergehenden Ansprüche,
**dadurch gekennzeichnet, dass**
die Düse in einer harten Kunststoffkomponente (52) des Windabweisers (22) integriert ist.

6. Windabweiser (22) nach einem der vorhergehenden Ansprüche,
**dadurch gekennzeichnet, dass**
eine Mehrzahl von Windleitelementen bzw. von Höckern (20) in einer Reihe angeordnet sind.

## Claims

1. A wind deflector (22) for a windscreen wiper system of an automobile, in which a windscreen cleaning device (16) with at least one nozzle (19) for cleaning a windscreen (56) is integrated, and which includes a wind deflector contour (23), by means of which an airflow can be guided in the area of an associated wiper arm (2) and a wiper blade (34), wherein
the wind deflector (22) includes at least one wind guiding element or a bump (20), which is arranged in the area of the associated nozzle (19) and convexly protrudes towards the windscreen (56), on its side (62) facing the wiper blade (34), wherein the nozzle (19) is integrated in the associated wind guiding element or in the associated bump (20),
**characterized in that**
a protective channel (59) enlarged in cross-section with respect to the nozzle (19) is integrated in the wind guiding element or in the bump (20).

2. The wind deflector (22) according to claim 1,
**characterized in that**
the nozzle (19) and the protective channel (59), respectively, open on a front side (60) of the wind guiding element (bump 20) facing the windscreen (56).

3. The wind deflector (22) according to any one of the preceding claims,
**characterized in that**
the wind guiding element or the bump (20) is formed of an elastic plastic component (51).

4. The wind deflector (22) according to any one of the preceding claims,
**characterized in that**
a trailing edge (64) is provided on a top side (61) of the wind deflector (22) and that the trailing edge (64) has a radius of less than 2 mm.

5. The wind deflector (22) according to any one of the preceding claims,
**characterized in that**
the nozzle is integrated in a hard plastic component (52) of the wind deflector (22).

6. The wind deflector (22) according to any one of the preceding claims,
**characterized in that**
a plurality of wind guiding elements or bumps (20) is arranged in a row.

## Revendications

1. Déflecteur de vent (22) pour un système d'essuie-glace d'un véhicule automobile, dans lequel est intégré un dispositif de nettoyage de vitre (16) comportant au moins une buse (19) pour nettoyer une vitre (56), et comprenant un contour de déflecteur de vent (23) au moyen duquel un écoulement d'air peut être guidé dans la zone d'un bras d'essuie-glace (2) associé et d'un balai d'essuie-glace (34),
le déflecteur de vent (22) comprenant, sur son côté (62) dirigé vers le balai d'essuie-glace (34), au moins un élément de guidage du vent ou un bossage (20) qui est agencé dans la zone de la buse (19) associée et fait saillie en relief en direction de la vitre (56), la buse (19) étant intégrée dans l'élément de guidage du vent associé ou dans le bossage (20) associé,
**caractérisé en ce que**
un canal de protection (59) à section transversale élargie par rapport à la buse (19) est intégré dans l'élément de guidage du vent ou dans le bossage (20).

2. Déflecteur de vent (22) selon la revendication 1,
**caractérisé en ce que**
la buse (19) ou le canal de protection (59) débouchent sur une face avant (60) de l'élément de guidage du vent (bossage 20) dirigée vers la vitre (56).

3. Déflecteur de vent (22) selon l'une des revendications précédentes,
**caractérisé en ce que**
l'élément de guidage du vent ou le bossage (20) est formé à partir d'un composant en matière plastique élastique (51).

4. Déflecteur de vent (22) selon l'une des revendications précédentes,
**caractérisé en ce que**
un bord d'attaque (64) est prévu sur une face supérieure (61) du déflecteur de vent (22) et **en ce que** le bord d'attaque (64) a un rayon inférieur à 2 mm.

5. Déflecteur de vent (22) selon l'une des revendications précédentes,
**caractérisé en ce que**
la buse est intégrée dans un composant en matière plastique dure (52) du déflecteur de vent (22).

6. Déflecteur de vent (22) selon l'une des revendications précédentes,
**caractérisé en ce que**
une pluralité d'éléments de guidage du vent ou de bossages (20) sont agencés en série.
